# DEMANDE DE BREVET EUROPEEN

(11) **EP 4 361 110 A1**
(43) Date de publication de la demande: **01.05.2024**
(21) Numéro de dépôt: 23206696.9
(22) Date de dépôt: 30.10.2023
(51) Int. Cl.: C02F 1/467, C02F 103/42

(54) **DISPOSITIF DE PRODUCTION D'HYPOCHLORITE DE SODIUM**

(30) Priorité: 31.10.2022 FR 2211361
(71) Demandeur: Pool Technologie, 34130 Valergues (FR)
(72) Inventeur: GRARD, PHILIPPE, 34130 MAUGUIO (FR); PEGUET, VIVIEN, MUDAISON (FR); SEGHIOUER, ADIL, VALERGUES (FR)
(74) Mandataire: Rhein, Alain

(57) **Abrégé**

Dispositif de production d'hypochlorite de sodium pour le traitement d'eau, à injecter dans un circuit d'eau à traiter ou à stocker avant injection, présentant d'une part un bloc (1) réacteur d'électrolyse comportant :
- Une cellule d'électrolyse (30) ;
- Un premier réservoir (4) d'eau comportant une tubulure d'alimentation (42) en eau adoucie et dont une tubulure de sortie (53) d'eau est reliée à une première pompe ;
- Un second réservoir (5) de saumure comportant un espace de stockage de sel et comportant une tubulure d'alimentation (40) en eau pour réaliser la saumure par mélange avec le sel stocké, et dont une tubulure de sortie (50) est reliée à une seconde pompe ;
et d'autre part une unité électronique (100) de gestion du réacteur d'électrolyse.

Le bloc (1) comporte un premier compartiment hydraulique (2) intégrant les deux réservoirs (4, 5) d'eau adoucie et de saumure, et un second compartiment électrohydraulique (3) séparé de manière étanche du premier compartiment (2) et comportant les pompes et la cellule d'électrolyse (30) dotée d'une entrée (38) pour le mélange d'eau et de saumure obtenu en sortie des pompes, et d'une sortie (39) pour l'hypochlorite de sodium produit.

## Description

### Description de l'invention

La présente invention concerne un dispositif de génération d'hypochlorite de sodium destiné au traitement de l'eau, plus particulièrement pour des bassins privés de type piscine ou, alternativement, pour des bassins collectifs ou à usage industriel Le dispositif de l'invention relève d'un fonctionnement dit OFF-LINE ou hors ligne en ce qu'il n'est pas directement alimenté par l'eau du bassin à traiter, et ne fonctionne donc pas en série avec le circuit hydraulique du bassin proprement dit, mais produit de l'hypochlorite de sodium selon un circuit hydraulique séparé, puis injecte le cas échéant (s'il y a un raccordement) le produit généré dans ledit circuit, en continu.

Dans de tels bassins privés, l'eau est traditionnellement traitée par injection de chlore liquide régulé par des systèmes de dosage, ou par utilisation de chlore solide disponible sous forme de galets. Alternativement, des solutions de désinfection par utilisation de rayonnements ultra-violet, par ozone ou par électrolyse du sel contenu dans le bassin sont utilisés. En bassins à usage collectifs ou industriels, on utilise également du chlore liquide dont le dosage est contrôlé, ou des rayonnements ultra-violets, ou encore de l'hypochlorite de calcium sous forme solide, dosé par un système adéquat.

L'invention se situe dans la famille des systèmes qui sont basés sur l'utilisation de sel, qui mettent en oeuvre une électrolyse de sel mis sous forme de solution saline, également dénommée saumure. L'invention propose à cet égard un traitement de l'eau sans adjonction de sel dans le bassin à traiter, comme c'est généralement le cas, ce qui aboutit à une bien meilleure maîtrise des quantités de sel utilisées, et évite en particulier d'en utiliser des quantités importantes non exploitées. L'objectif de l'invention est de proposer un dispositif compact qui produit en continu la quantité d'hypochlorite de sodium nécessaire et suffisante à la purification du bassin traité.

A cet effet, le dispositif de production d'hypochlorite de sodium de l'invention présente d'une part un bloc réacteur d'électrolyse comportant :
- Une cellule d'électrolyse ;
- Un premier réservoir d'eau comportant une tubulure d'alimentation en eau adoucie et dont une tubulure de sortie d'eau est reliée à une première pompe ;
- Un second réservoir de saumure comportant un espace de stockage de sel et comportant une tubulure d'alimentation en eau pour réaliser la saumure par mélange avec le sel stocké, et dont une tubulure de sortie est reliée à une seconde pompe ;
et d'autre part une unité électronique de gestion du réacteur d'électrolyse.

Plus particulièrement, selon l'invention, le bloc compact comporte un premier compartiment hydraulique intégrant les deux réservoirs d'eau adoucie et de saumure, et un second compartiment électrohydraulique séparé de manière étanche du premier compartiment et comportant les pompes et la cellule d'électrolyse dotée d'une entrée pour le mélange d'eau et de saumure obtenu en sortie des pompes, et d'une sortie pour l'hypochlorite de sodium produit.

Le bloc traduit bien la compacité du dispositif, avec des éléments constitutifs fortement liés et qui sont très rapprochés, puisqu'il intègre deux des trois modules qui sont indispensables au fonctionnement de l'invention, à savoir un module hydraulique comportant les réservoirs de liquide, et un module électrohydraulique qui comporte les composants nécessitant une énergie de nature électrique. Le troisième module, celui de l'unité de commande électronique, peut être délocalisé du bloc qui ne comporte alors que les parties accessibles aux liquides. L'agencement en deux compartiments reflète par ailleurs l'objectif de relative miniaturisation affecté au dispositif, allant dans le sens d'une réduction maximale des espaces par optimisation des volumes de liquides utiles à la production d'hypochlorite de sodium. Cet agencement, comme on le verra plus en détail dans la suite, est aussi conçu pour faciliter l'utilisation et le fonctionnement du dispositif, à la fois pour les utilisateurs (accès aux compartiments), pour la gestion des liquides et pour la fabrication du bloc complet et équipé.

Ainsi, selon un aspect plus particulièrement lié au confort utilisateur, le premier compartiment hydraulique comporte une ouverture supérieure permettant un accès par le dessus du bloc, présentant une trappe d'accès à un orifice de versement du sel dans le second réservoir de saumure. L'ouverture supérieure donne accès à l'ensemble du compartiment hydraulique du bloc, mais cette ouverture est contrôlée, comme on le verra plus en détail dans la suite.

Dans une configuration possible de l'invention, le premier réservoir d'eau adoucie et le second réservoir de saumure sont à remplissage automatique et équipés chacun d'un mécanisme de mesure de niveau de liquide, par exemple d'une valve à flotteur, apte à stopper l'alimentation en eau à un niveau prédéterminé de remplissage du réservoir. En d'autres termes, la source de leur alimentation, qui est extérieure à l'invention - un conteneur de stockage d'eau adoucie par exemple - ne comporte pas nécessairement de moyens de régulation de l'alimentation du bloc de l'invention, le débit d'alimentation étant géré directement dans ce dernier, d'une manière très simple et très classique par exemple par un flotteur dont le niveau dans le réservoir contrôle une valve d'accès qui se ferme quand le niveau prévu lors de la conception est atteint.

Il est à noter que, selon une configuration possible, les extrémités libres des tubulures de sortie des réservoirs sont équipées chacune d'une crépine lestée. Ces crépines d'aspiration permettent d'abord une filtration du liquide aspiré, visant à éliminer les impuretés pour éviter d'obstruer les pompes en aval. Elles sont lestées pour s'assurer qu'elles restent positionnées dans le fond du réservoir, là où la collecte de liquide est souhaitée.

On a mentionné l'attention portée, dans la conception, à faciliter la fabrication du dispositif : dans cette perspective, les tubulures d'alimentation des deux réservoirs et les mécanismes de mesure de niveau d'une part, par exemple des valves à flotteur, et chaque tubulure de sortie et sa crépine d'autre part, sont prémontés en des sous-ensembles prêts à être installés. Il y a au moins un premier sous-ensemble d'alimentation de chaque réservoir, et deux sous-ensembles de liaison entre les réservoirs du premier compartiment hydraulique et les pompes du second compartiment électrohydraulique.

Pour faciliter encore la conception du bloc de l'invention, le réservoir de saumure est de préférence alimenté en eau adoucie, et les tubulures d'alimentation en eau adoucie des deux réservoirs comportent dès lors une partie amont commune. Dans ce cas, il ne subsiste que trois sous-ensembles prémontés, puisqu'il n'y a plus qu'un sous-ensemble d'alimentation.

Le montage de ces sous-ensembles au bloc réacteur est notamment facilité car la bordure périphérique de l'ouverture supérieure du premier compartiment hydraulique présente une goulotte parcourant la périphérie et divisée en une première portion pour des tubulures de et vers le second compartiment électrohydraulique et une seconde portion logeant des câbles conducteurs de liaison entre l'unité électronique de gestion et le second compartiment électrohydraulique. La première portion de goulotte comporte notamment une portion des tubulures de sortie des réservoirs, qui y reposent.

Selon une configuration préférentielle, le réservoir d'eau adoucie occupe une fraction du volume du réservoir de saumure, et consiste en un récipient qui est positionné fixe et débouche ouvert en partie supérieure du bloc, la tubulure d'alimentation alimentant par le haut du réservoir un robinet couplé à une valve à flotteur. Une fraction de l'ouverture supérieure du premier compartiment est donc occupée par l'ouverture supérieure du réservoir d'eau adoucie. Celle-ci permet un positionnement facile et précis de l'ensemble robinet/valve à flotteur.

Du fait du positionnement du réservoir d'eau adoucie qui en occupe une partie, le réservoir de saumure, qui consiste en le reste du premier compartiment, est délimité par la paroi périphérique interne du bloc, l'extérieur du réservoir d'eau adoucie, la face externe de la paroi de séparation entre le premier et le second compartiment et le fond du bloc. Il débouche également ouvert en partie supérieure du bloc, constituant le reste de l'ouverture du premier compartiment, et il est divisé en deux espaces par une cloison dont une portion inférieure est munie d'orifices de passage de liquide, un premier espace dans lequel le sel est stocké et un second espace qui loge la tubulure d'alimentation en eau, la valve à flotteur et la crépine d'extrémité de la tubulure de sortie. L'orifice de versement du sel est disposé à l'aplomb du premier espace. La séparation entre l'espace contenant le sel et celui qui comporte les composants de ce circuit hydraulique de la saumure garantit que ce dernier ne traite que du liquide, et non pas de possibles résidus solides ou pâteux résultant d'une dissolution incomplète du sel dans l'eau.

De préférence, la cloison est un tube cylindrique placé sur un plot cylindrique de diamètre du même ordre et inférieur au diamètre interne du tube qui dépasse du fond du bloc, ledit tube étant centré dans une collerette supérieure dépassant de la bordure périphérique de l'ouverture supérieure vers l'intérieur, la tubulure d'alimentation alimentant par le haut du tube cylindrique un robinet couplé à une valve à flotteur placée dans le tube cylindrique à une hauteur prédéterminée.

Il est à noter que le logement du réservoir d'eau adoucie présente, dans une bordure périphérique supérieure, un créneau s'ouvrant vers le haut du tube cylindrique formant le second espace du réservoir de saumure. Dans l'hypothèse où la valve à flotteur est défectueuse, le trop plein de ce réservoir, de volume bien inférieur à celui du réservoir de saumure, s'écoule alors vers ce dernier.

On a mentionné auparavant l'existence d'une trappe d'accès à un orifice de versement du sel dans le réservoir de saumure, équipant l'ouverture supérieure du premier compartiment hydraulique. Plus précisément, cette ouverture supérieure est refermée par un capot couvrant la goulotte périphérique, le réservoir d'eau douce et le second espace du réservoir de saumure, et qui présente une fenêtre d'accès au premier espace dudit réservoir de saumure, ledit capot étant recouvert par une plaque formant trappe. Une simple ouverture de la trappe permet de révéler le capot dans lequel est pratiquée l'orifice de versement de sel solide, par exemple sous forme pulvérulente. Le bloc est dimensionné pour que l'utilisateur puisse verser une quantité de sel suffisant à la production d'hypochlorite de sodium pour une saison d'utilisation.

Selon l'invention, le second compartiment électrohydraulique comporte un accès par une paroi latérale extérieure du bloc, un capot contrôlant ledit accès. L'accès se fait par conséquent par l'extérieur du bloc, de manière à faciliter les interventions notamment lors d'opérations de maintenance. L'objectif est aussi de faciliter la fabrication de la partie électrohydraulique du bloc réacteur.

Ainsi, de préférence, la cellule d'électrolyse et un bloc comportant les deux pompes sont prémontés sur une platine fixée au fond du second compartiment. Il s'agit d'une autre possibilité de prémontage des sous-ensembles dans le but de faciliter la fabrication du bloc réacteur de l'invention en réduisant les étapes de montage au niveau du bloc.

Il est à noter qu'un capteur de sel et de température est placé sur la cellule d'électrolyse et relié à l'unité électronique de gestion. Il vise à procurer un retour d'information à l'unité centrale électronique, qui peut adapter ou stopper la production d'hypochlorite de sodium en cas de problème. L'information du niveau de salinité du liquide en cours d'électrolyse est en particulier un marqueur de problèmes dans l'alimentation de la cellule, de même qu'une élévation de température qui peut signaler que la cellule d'électrolyse, mal alimentée en liquide, chauffe sous l'effet du courant envoyé à l'électrode.

Les deux pompes dosent respectivement la quantité d'eau adoucie et la quantité de saumure à injecter dans la cellule d'électrolyse, permettant d'assurer des conditions optimales de salinité de l'électrolyte. Il est à noter que les circuits hydrauliques décrits, avec deux chemins d'alimentation des pompes doseuses qui alimentent ensuite la cellule d'électrolyse permettent d'assurer une concentration parfaitement contrôlée et continue en électrolyte. En aval, l'hypochlorite de sodium est généré en continu et évacué par la sortie de la cellule d'électrolyse. Ce montage avec les pompes en aval de la cellule conduit en pratique à conférer deux fonctions aux pompes : elles dosent l'électrolyte, et elles « poussent » le liquide dans le circuit, agissant comme des pompes de circulation du liquide permettant une production et une injection continus de l'hypochlorite de sodium dans le circuit hydraulique du bassin à traiter ou dans un contenant de stockage.

On n'est pas dans un fonctionnement séquentiel, mais dans une production continue, alors même que la production est OFF-LINE (hors ligne) : en réalité, si besoin, l'hypochlorite de sodium est injecté dans le bassin en continu, selon une caractéristique qui est d'habitude l'apanage des systèmes dits IN-LINE (en ligne) placés en série sur les circuits hydrauliques et par lesquels la totalité de l'eau du bassin passe grâce à la pompe de circulation. Jusqu'ici, les systèmes hors lignes fonctionnaient de manière séquentielle, donc complexe, produisant et injectant le produit en des phases distinctes et/ou partiellement entremêlées, alors que ce n'est pas le cas du dispositif de l'invention, qui se comporte comme un système en ligne traditionnel. En d'autres termes, on retrouve dans le dispositif hors ligne de l'invention la même simplicité d'utilisation que pour les systèmes en ligne, mais avec des avantages prépondérants par rapport à ceux-ci : l'invention propose de fait un traitement de l'eau sans ajout de sel dans le bassin à traiter, qui ne permet pas une maîtrise suffisante des quantités de sel. Ainsi, il n'est pas nécessaire d'utiliser une importante quantité de sel (1,5g/l à 5g/l). On utilise seulement la quantité de sel nécessaire à la production de solution d'hypochlorite de sodium adaptée au traitement du bassin.

Secondairement, contrairement aux systèmes en ligne, l'invention permet de réduire considérablement la quantité de chlorures et autres composés chimiques, tels que ceux qui sont communément appelés stabilisants, rejetés lors du contre-lavage du filtre d'un bassin. Enfin, la production continue d'une solution d'hypochlorite frais à une concentration donnée en chlore actif supprime les difficultés et aléas liés au transport, au stockage et à la manutention de produits chimiques dangereux tels que le chlore liquide ou l'hypochlorite de calcium.

L'unité électronique de gestion du réacteur d'électrolyse est prévue - et cela concerne autant les aspects matériels que logiciels - pour commander l'ensemble des composants du réacteur de sorte que la cellule d'électrolyse fonctionne en vue de produire une quantité prévue d'hypochlorite de sodium à une concentration prédéterminée. Le logiciel permet en particulier de gérer les débits respectifs des pompes, et par conséquent la quantité produite d'hypochlorite de sodium, ainsi que les informations en retour des capteurs, en particulier le capteur de sel et de température associé à la cellule d'électrolyse. Un capteur d'hypochlorite dans le bassin, connecté à l'unité électronique, permet par ailleurs de renseigner sur la valeur de la consigne de quantité d'hypochlorite de sodium dans le bassin : si celle-ci est atteinte, un signal d'arrêt de la production peut être envoyé.

Le boîtier/coffret comportant l'unité électronique de gestion du réacteur peut être délocalisé, c'est-à-dire placé à un endroit séparé du bloc réacteur, ce qui offre une certaine liberté de choix d'installation par rapport à l'emplacement du bloc (mur d'un local technique...) ou être rigidement lié au dit bloc, par exemple fixé au sommet d'une potence qui est elle-même solidarisée au bloc.

D'autres buts et avantages de la présente invention apparaîtront au cours de la description qui va suivre, se rapportant à des modes de réalisation qui ne sont donnés qu'à titre d'exemples indicatifs. La compréhension de cette description sera en particulier facilitée en référence aux dessins joints en annexe et dans lesquels :
[Fig.1] montre une vue en perspective éclatée les différentes parties et notamment les sous-ensembles formant le bloc générateur de l'invention ;
[Fig.2] est une vue en coupe transversale II-II du bloc au niveau du premier réservoir d'eau adoucie ;
[Fig.3] représente en vue perspective la platine comportant les équipements du second compartiment électrohydraulique ; et
[Fig.4] illustre avec un schéma bloc simplifié le mode de fonctionnement de l'invention.

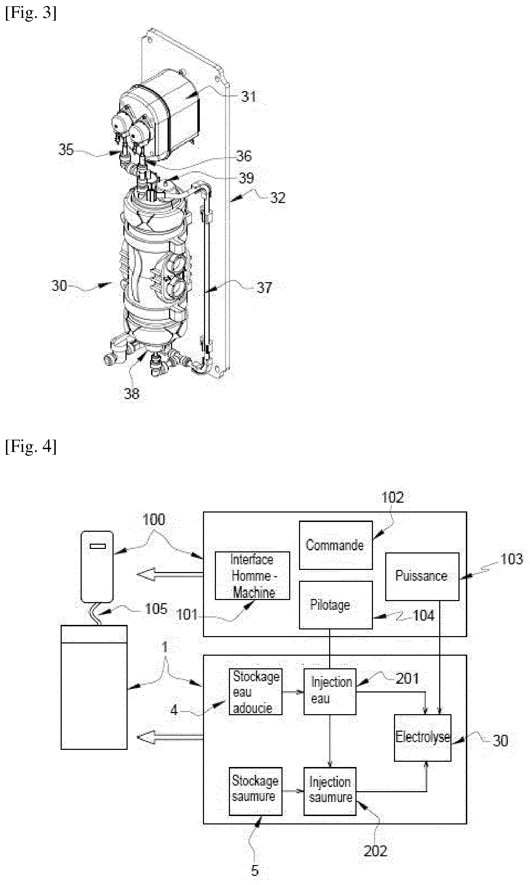

En référence aux figures, le bloc 1 du réacteur d'électrolyse, d'allure très généralement cylindrique verticale, est divisé en deux grandes parties : un premier compartiment hydraulique 2 occupant la majeure partie du volume du bloc 1, et un second compartiment électrohydraulique 3 formant une sorte de niche sur le côté. Les deux compartiments 2 et 3 s'ouvrent vers l'extérieur, respectivement vers le haut et latéralement, et sont isolés l'un de l'autre par une paroi étanche 7. Le premier compartiment 2 contient les deux réservoirs d'eau adoucie 4 et de saumure 5. Le second compartiment 3 comporte, sur une platine 32 de taille adaptée à être insérée et fixée au fond du compartiment 3, un bloc 31 incluant les deux pompes et la cellule d'électrolyse 30 (voir également en [Fig.3]). Un capot 33 d'allure rectangulaire vient refermer le compartiment 3. De même, un capot 10 de protection muni d'un orifice 11 d'accès au premier compartiment 2 referme partiellement l'ouverture supérieure 6 du premier compartiment 2, en laissant la possibilité de verser du sel par ledit orifice 11. Une trappe 12 d'accès audit orifice 11 munie d'un orifice de préhension est prévue pour clore le volume du premier compartiment 2.

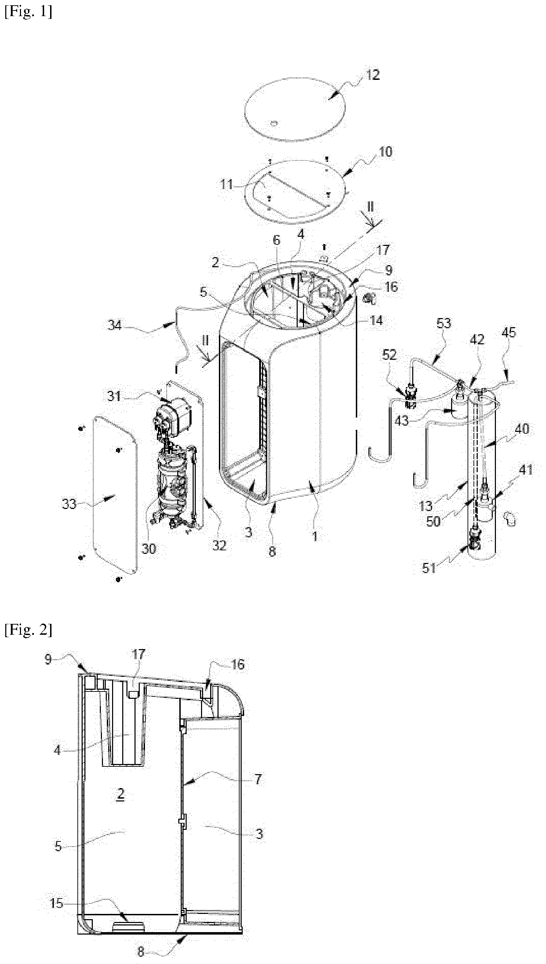

Le premier réservoir 4, dévolu à l'eau adoucie, apparaît plus particulièrement en [Fig.2]. Il s'agit d'un récipient 4 solidaire de l'intérieur de la bordure périphérique 9 de l'ouverture supérieure 6 du bloc 1, récipient 4 dont la surface à son débouché supérieur occupe un quartier (sensiblement un quart) de l'ouverture supérieure 6 en l'occurrence d'allure circulaire, et qui descend d'une profondeur limitée à l'intérieur du premier compartiment 2, laissant la majeure partie du volume creux du premier compartiment 2 au second réservoir 5. Il est à noter que le bloc 1 est de préférence obtenu par rotomoulage de plastique et est constitué d'une seule pièce comportant notamment la paroi périphérique du bloc 1, la paroi 7 délimitant le second compartiment 3, le fond 8, le premier réservoir 4 d'eau adoucie relié à la bordure supérieure 9, ainsi que des parties du second réservoir 5 comme il sera décrit dans la suite. Ledit second réservoir 5 est divisé en deux espaces par une cloison en forme de tube cylindrique 13 (voir en [Fig. 1]) qui réserve en fait une partie du réservoir 5 à la phase purement liquide de son contenu. Ce tube 13 relie une collerette 14 supérieure venue de moulage avec le bloc 1 à un plot 15 inférieur également moulé avec le reste du bloc 1, ces deux éléments participant à sa fixation et à son centrage à l'intérieur du second réservoir 5. Le tube 13 se centre sans serrage sur le plot 15, dont les dimensions sont prévues pour s'insérer dans l'extrémité inférieure dudit tube 13. Le tube cylindrique 13 peut coulisser dans la collerette 14 supérieure où, du fait de sa dimension axiale, il est retenu radialement.

Le tube 13 englobe un robinet d'alimentation 41 à valve à flotteur placée à l'extrémité d'une tubulure d'alimentation 40 du second réservoir 5, ainsi qu'une crépine lestée 51 équipant l'extrémité d'une tubulure de sortie 50 reliée à l'une des pompes du bloc 31. De même, une tubulure d'alimentation 42 du premier réservoir 4 est raccordée à un robinet d'alimentation 43 à valve à flotteur, placé à l'intérieur du premier réservoir 4, au voisinage de sa surface de débouché supérieure. Une crépine lestée 52 est également placée au fond du premier réservoir 4 d'eau adoucie, à l'extrémité d'une tubulure de sortie 53 reliée à l'autre pompe du bloc 31. L'alimentation des deux réservoirs s'effectuant avec de l'eau adoucie, une tubulure d'arrivée d'eau commune 45 disposée en amont permet le raccordement avec un contenant extérieur d'eau adoucie, le cas échéant partie d'une installation plus globale d'adoucissement d'eau. L'utilisation d'eau adoucie partout est préférable pour que la ou les électrodes de la cellule d'électrolyse soit préservée des impuretés calcaires susceptibles de dégrader son fonctionnement et de conduire à des interventions de maintenance qu'on cherche à éviter.

Il est à noter que les crépines respectivement 51, 52 et les tubulures de sortie respectivement 50, 53 sont prémontées en deux sous-ensembles qui permettent de simplifier l'assemblage lors de la fabrication du réacteur. Il en va de même pour le sous-ensemble d'alimentation, qui comprend - en cas d'utilisation d'eau adoucie partout - la tubulure commune 45, les deux tubulures d'alimentation 40, 42 et les deux robinets à valve à flotteur 41, 43.

Les tubulures de sortie 50, 53 sont figurées avec des formes particulières, dont une portion curviligne qui montre qu'elles sont destinées à s'insérer dans une portion de la goulotte périphérique 16 du bloc 1, goulotte 16 reliée à la bordure périphérique 9, immédiatement à l'intérieur de celle-ci, et permettant de protéger les liaisons hydrauliques entre les crépines d'aspiration 51, 53 et les pompes au moyen du capot 10. L'extrémité libre de ces tubulures de sortie 50, 53, représenté en forme de crochet, retrace leur portion finale qui arrive en partie supérieure du compartiment 3, descend en pratique sous le bloc des pompes 31 puis remonte pour se raccorder aux deux pompes. Une tubulure 34 de sortie de la cellule d'électrolyse passe également par la goulotte 16, en vue d'alimenter un circuit hydraulique de bassin ou un conteneur de stockage.

La partie inférieure du tube 13 est équipée de trous de passage de la saumure, sur une hauteur qui va jusqu'aux environs de la position du robinet à valve à flotteur 41, qui marque en pratique la hauteur de liquide dans le réservoir 5. La saumure aspirée dans la crépine est donc dépourvue de sel non dissout ou mal dissout dans l'eau, celui-ci étant confiné - toujours dans le réservoir 5 de saumure - à l'extérieur du tube 13. Il est à noter qu'une encoche de type créneau 17 est prévue dans la bordure supérieure de la cloison de séparation du réservoir 4 et de la collerette 14 qui sont contigus, permettant à un éventuel trop-plein de liquide du réservoir 4, en cas de dysfonctionnement de la valve à flotteur 43, de se déverser dans le tube 13. Un orifice de vidange est par ailleurs prévu en parie inférieure du bloc 1, pour vidanger s'il y a lieu le réservoir de saumure 5.

En référence à la [Fig.3], les sorties 35, 36 des deux pompes sont reliées à l'entrée 38 de la cellule d'électrolyse au moyen d'une tubulure 37. La sortie 39 de ladite cellule 30 est raccordée à la tubulure 34 (voir en [Fig. 1]) pour véhiculer l'hypochlorite de sodium, via un passage dans la goulotte 16, vers un circuit hydraulique de bassin ou vers un conteneur de stockage. La cellule d'électrolyse 30 comporte par ailleurs un robinet de vidange et, comme déjà mentionné, un capteur de sel et de température.

La [Fig.4] schématise le fonctionnement commun de l'ensemble bloc 1/unité électronique 100, et figure donc d'une part le bloc 1 contenant le réacteur de production d'hypochlorite de sodium et d'autre part l'unité électronique de gestion 100, lequel présente notamment une interface homme-machine 10 1 permettant une gestion humaine depuis l'extérieur, par exemple pour modifier des paramétrages de fonctionnement du bloc réacteur 1. La commande électronique 102 de ce dernier présente deux aspects principaux : un aspect puissance 103 pour la cellule d'électrolyse 30, qui nécessite des courants forts à envoyer à l'électrode pour la mise en oeuvre de l'électrolyse (sachant que l'électrode change, ainsi que son courant d'alimentation, selon le volume du bassin à traiter), et un aspect pilotage 104 qui implique des courants faibles véhiculant des informations à destination des pompes, de la cellule d'électrolyse 30 ou issus des capteurs. L'unité électronique de gestion 100 est contenue dans un boîtier ou coffret comportant par exemple un écran de visualisation et un clavier d'interfaçage, et qui peut être fixé à une paroi du local technique du bassin, ou à une potence elle-même, qui peut être solidarisée à une portion plane de la face externe du bloc 1.

La partie hydraulique, qui comporte à cet effet les deux réservoirs 4, 5, permet le stockage de l'eau adoucie et de la saumure, dont les liquides respectifs sont dosés par les pompes en vue respectivement de l'injection d'eau 201 et de l'injection de saumure 202 dans la cellule d'électrolyse 30. Ces deux liquides sont mélangés en sortie du bloc pompes 31, en amont de la cellule d'électrolyse 30. L'unité électronique 100 de gestion du bloc 1 est reliée à ce dernier par un faisceau de conducteurs 105 qui est également partiellement logé dans une portion spécifique de la goulotte 16, entre son point d'accès dans le bloc 1 et le second compartiment 3, et par conséquent protégé par le capot 10.

Le traitement électronique proprement dit garantit que la concentration en sel est toujours la même, celle qui correspond à la consigne établie par l'utilisateur. L'utilisation des deux pompes permet un dosage fin de l'électrolyte en sel provenant de la saumure, et par conséquent une optimisation de la concentration en sel dans l'électrolyte. Quantitativement, dans l'invention, le sel est utilisé à bon escient, car l'électrolyte contient très précisément le taux de sel prédéterminé. Les pompes sont par exemple commandées par des signaux en modulation d'amplitude (PWM), qui permettent de s'adapter très souplement au contexte de traitement : un fonctionnement à 50% de la capacité du réacteur, du fait d'une consigne par exemple fonction de la taille du bassin, implique une commande avec des signaux d'entrée périodiques carrés qui sont au niveau 1 (ON) pendant 50% du temps et au niveau 0 (OFF) les 50% du temps restant.

Le débit de l'une des pompes (eau adoucie) est de l'ordre de dix fois supérieur au débit de l'autre (saumure). Pour des pompes péristaltiques, par exemple, cela signifie que la première est commandée pour tourner environ dix fois plus vite que la seconde. La commande de leurs débits respectifs d'une part, et la forme de leur signal de commande d'autre part, permettent un réglage très précis du taux de sel dans l'électrolyte, et par conséquent de la quantité produite d'hypochlorite de sodium.

Dans l'exemple du bassin d'une piscine de taille moyenne (70-80 m³), la consommation de liquide est de l'ordre de 10-111/h (soit environ 240 1 par jour), quantité qui est injectée dans le bassin et y compense toutes les pertes habituelles de liquide (éclaboussures, évaporation..). Pour l'utilisateur, il suffit de verser, au début de la saison, deux sacs de 25 kg de sel pour un fonctionnement qui peut ensuite durer toute la saison de baignade.

Les exemples de configuration qui font l'objet des figures ne doivent pas être considérés comme exhaustifs de l'invention, qui englobe au contraire des variantes de structure, touchant par exemple aux formes des réservoirs, du bloc etc.

## Revendications

1. Dispositif de production d'hypochlorite de sodium pour le traitement d'eau, à injecter dans un circuit d'eau à traiter ou à stocker avant injection, présentant d'une part un bloc (1) réacteur d'électrolyse comportant :
- Une cellule d'électrolyse (30) ;
- Un premier réservoir (4) d'eau comportant une tubulure d'alimentation (42) en eau adoucie et dont une tubulure de sortie (53) d'eau est reliée à une première pompe ;
- Un second réservoir (5) de saumure comportant une tubulure d'alimentation (40) en eau et dont une tubulure de sortie (50) est reliée à une seconde pompe ;
et d'autre part une unité électronique (100) de gestion du réacteur d'électrolyse,
**caractérisé en ce que** le bloc (1) compact comporte un premier compartiment hydraulique (2) intégrant les deux réservoirs (4, 5) d'eau, le premier réservoir (4) étant alimenté en eau adoucie et le second réservoir (5) de saumure comportant un espace de stockage de sel pour réaliser la saumure par mélange avec le sel stocké, et un second compartiment électrohydraulique (3) formant une niche sur le côté du bloc (1), séparé de manière étanche du premier compartiment (2) par une paroi étanche 7 et comportant les pompes et la cellule d'électrolyse (30) dotée d'une entrée (38) pour le mélange d'eau et de saumure obtenu en sortie des pompes, et d'une sortie (39) pour l'hypochlorite de sodium produit.

2. Dispositif de production d'hypochlorite de sodium pour le traitement d'eau selon l'une des revendications précédentes, **caractérisé en ce que** le premier réservoir (4) d'eau adoucie et le second réservoir (5) de saumure sont à remplissage automatique et équipés chacun d'un mécanisme de mesure de niveau de liquide, par exemple d'une valve à flotteur (41, 43), apte à stopper l'alimentation en eau à un niveau prédéterminé de remplissage du réservoir (4, 5).

3. Dispositif de production d'hypochlorite de sodium pour le traitement d'eau selon l'une des revendications précédentes, **caractérisé en ce que** les extrémités libres des tubulures de sortie (50, 53) des réservoirs (4, 5) sont équipées chacune d'une crépine (51, 52) lestée.

4. Dispositif de production d'hypochlorite de sodium pour le traitement d'eau selon l'une des revendications 3 et 4, **caractérisé en ce que** les tubulures d'alimentation (40, 42, 45) des deux réservoirs et les mécanisme de mesure de niveau d'une part, par exemple des valves à flotteur (41, 43), et chaque tubulure de sortie (50, 53) et sa crépine (51, 52) d'autre part, sont prémontés en des sous-ensembles prêts à être installés.

5. Dispositif de production d'hypochlorite de sodium pour le traitement d'eau selon la revendication précédente, **caractérisé en ce que** le réservoir de saumure (5) est alimenté en eau adoucie, et les tubulures d'alimentation (40, 42) en eau adoucie des deux réservoirs (4, 5) comportent une partie amont (45) commune.

6. Dispositif de production d'hypochlorite de sodium pour le traitement d'eau selon l'une des revendications 2 à 6, **caractérisé en ce que** la bordure (9) périphérique de l'ouverture supérieure (6) du premier compartiment hydraulique (2) présente une goulotte (16) parcourant la périphérie et divisée en une première portion pour des tubulures (50, 53, 34) de et vers le second compartiment électrohydraulique (3) et une seconde portion logeant des câbles conducteurs (105) de liaison entre l'unité électronique (100) de gestion et le second compartiment électrohydraulique (3).

7. Dispositif de production d'hypochlorite de sodium pour le traitement d'eau selon l'un des revendications précédentes, **caractérisé en ce que** le réservoir d'eau adoucie (4) occupe une fraction du volume du réservoir de saumure (5), et consiste en un récipient qui est positionné fixe et débouche ouvert en partie supérieure du bloc (1), la tubulure d'alimentation (42) alimentant par le haut du réservoir (4) un robinet couplé à une valve à flotteur (43).

8. Dispositif de production d'hypochlorite de sodium pour le traitement d'eau selon l'un des revendications précédentes, **caractérisé en ce que** le réservoir de saumure (5) est délimité par la paroi périphérique interne du bloc (1), l'extérieur du réservoir d'eau adoucie (4), la face externe de la paroi de séparation (7) entre le premier (2) et le second (3) compartiment et le fond (8) du bloc (1), et débouche ouvert en partie supérieure du bloc, et **en ce qu'**il est divisé en deux espaces par une cloison (13) dont une portion inférieure est munie d'orifices de passage de liquide, un premier espace dans lequel le sel est stocké et un second espace qui loge la tubulure d'alimentation (40) en eau, la valve à flotteur (41) et la crépine (51) d'extrémité de la tubulure de sortie (50).

9. Dispositif de production d'hypochlorite de sodium pour le traitement d'eau selon la revendication précédente, **caractérisé en ce que** la cloison est un tube cylindrique (13) placé sur un plot cylindrique (15) de diamètre du même ordre et inférieur au diamètre interne du tube (13) qui dépasse du fond (8) du bloc (1), ledit tube (13) étant centré dans une collerette (14) supérieure dépassant de la bordure périphérique (9) de l'ouverture supérieure (6) vers l'intérieur, la tubulure d'alimentation (40) alimentant par le haut du tube cylindrique (13) un robinet couplé à une valve à flotteur (41) placée dans le tube cylindrique (13) à une hauteur prédéterminée.

10. Dispositif de production d'hypochlorite de sodium pour le traitement d'eau selon la revendication précédente, **caractérisé en ce que** le récipient du réservoir d'eau adoucie (4) présente, dans une bordure périphérique supérieure, un créneau (17) s'ouvrant vers le haut du tube cylindrique (13) formant le second espace du réservoir de saumure (5).

11. Dispositif de production d'hypochlorite de sodium pour le traitement d'eau selon l'une des revendications 7 à 11, **caractérisé en ce que** l'ouverture supérieure (6) du premier compartiment hydraulique (2) est refermée par un capot (10) couvrant la goulotte périphérique (16), le réservoir d'eau douce (4) et le second espace du réservoir de saumure (5), et qui présente une fenêtre (11) d'accès au premier espace dudit réservoir de saumure (5), ledit capot (10) étant recouvert par une plaque (12) formant trappe.

12. Dispositif de production d'hypochlorite de sodium pour le traitement d'eau selon l'un des revendications précédentes, **caractérisé en ce que** le second compartiment électrohydraulique (3) comporte un accès par une paroi latérale extérieure du bloc (1), un capot (33) contrôlant ledit accès.

13. Dispositif de production d'hypochlorite de sodium pour le traitement d'eau selon l'une des revendications précédentes, **caractérisé en ce que** la cellule d'électrolyse (30) et un bloc (31) comportant les deux pompes sont prémontés sur une platine (32) fixée au fond du second compartiment (3).

14. Dispositif de production d'hypochlorite de sodium pour le traitement d'eau selon l'une des revendications précédentes, **caractérisé en ce qu'**un capteur de sel et de température est placé sur la cellule d'électrolyse (30) et relié à l'unité électronique de gestion (100).
